# EUROPEAN PATENT APPLICATION

(11) **EP 1 367 832 A2**
(43) Date of publication of application: **03.12.2003**
(21) Application number: 03101579.5
(22) Date of filing: 30.05.2003
(51) Int. Cl.: H04N 7/24

(54) **Arrangement for creating multimedia presentation**

(30) Priority: 31.05.2002 FI 20021048
(71) Applicant: Oplayo Oy, 00180 Helsinki (FI)
(72) Inventor: Alvesalo, Antero, 02180, ESPOO (FI)
(74) Representative: Savela, Antti-Jussi

(57) **Abstract**

This invention relates to creating a multimedia show. A multimedia mobile terminal is a control panel for creating a multimedia show. The actual work for making the multimedia show is made in a special editor tool, preferably in a server of a communication network. When the user of the multimedia mobile terminal desires to create a multimedia show, he may ask for templates or a certain template for the show from the server. The server sends the requested template to the mobile terminal. The user can select contents into the template that is the structure of the multimedia show. The contents are according to the template, for example, video clips, audio clips, text, images or another content type, When the contents are defined, the references of the contents and the template is sent from the mobile terminal to the server, for the editor tool.

## Description

### Field of the Invention

This invention relates to creating a multimedia show. The multimedia show comprises several elements, which can be different content types, such as video, text, image, logo, drawing, transition, special effects, and audio. Especially, the invention relates to creating a multimedia show in a mobile terminal and in a communication network.

### Background of the Invention

Present solutions are relatively large and tedious to use for a normal user who wants to create a multimedia show, for example, from his vacation day and to send it to his friends. The user has to use an efficient computer with a dedicated software tool, or an advanced mobile terminal with multimedia features.

The software tools require great processing capacity, since otherwise handling of images and videos is practically impossible. Further, the software tools usually contain various special features, such as transitions and filters for creating desired effects.

The mobile terminal solutions are not as sophisticated as the actual software tools for creating multimedia shows. The normal memory and processing capacity of a mobile terminal are limited. Due to this it is not possible to make so outstanding multimedia shows in a mobile terminal. Further, the present solutions require that users can write SMIL (Synchronized Multimedia Integration Language) language. SMIL is very similar to the HTML language. Documents can be written in any text editor. A SMIL presentation is constructed from different elements, such as audio, video, text, and images. Although, the SMIL language is considered to be easy to use and learn, it requires a relatively good knowledge and skills to use it well in practice. Many users consider this too tedious. The SMIL presentations are transmitted via a MMS (Multimedia Messaging Service) service, which works like a SMS (Short Messaging Service) service.

The present mobile phones do not support video clips, so it is only possible to include still images, text, and audio clips with limited features in a multimedia show. It is possible to take pictures and record audio clips in the multimedia mobile phone, but really advanced multimedia functions are beyond the user of the phone.

The goal of the invention is to provide a solution for the users of the multimedia mobile terminals to create a number of different multimedia shows with different advanced features. This is achieved in a way described in the claims.

### Summary of the Invention

The concept of the invention is that the multimedia mobile terminal is a control panel for creating a multimedia show. Also a fixed terminal is possible as the control panel. The actual work for making the multimedia show is made in a special editor tool, preferably in a server of a communication network. When the user of the multimedia mobile terminal desires to create a multimedia show, he may ask for pre-made templates or a certain template for the show from the server. The server sends the requested templates or template to the mobile terminal. Now the user can select contents into the template that is the structure of the multimedia show. The contents are according to the template, for example, video clips, audio clips, text, images or another content type, When the contents are defined, the references of the contents and the template is sent from the mobile terminal to the server, for the editor tool. The contents can actually be situated in any location, from where they are transmitted to the editor tool for creating the multimedia show. Due to this, it is also possible to send the actual contents from the mobile terminal to the server in place of the references of the contents.

The editor tool creates the multimedia show, which is possible to send to any desired place.

The inventive arrangement comprises an editor tool, which is adapted to work with the control panel. The control panel defines a structure and contents for the multimedia show, and it is functionally connectable to the editor tool via a communication network.

The inventive method comprises the steps of: using a template for defining a structure for the multimedia show; defining contents into the template in a control panel by using references of the contents; transmitting the template and references of the contents from the control panel to an editor tool; and creating the multimedia show according to the template and the references in the editor tool.

### Brief Description of the Drawings

In the following the invention is described in more detail by means of FIGs **1 - 6** in the attached drawings where,
- FIG. **1**: illustrates an example of an inventive arrangement,
- FIG. **2**: illustrates an example of a multimedia show template,
- FIG. **3**: illustrates an example of another multimedia show template,
- FIG. **4**: illustrates an example of the template of FIG. 2 in a multimedia mobile terminal,
- FIG. **5**: illustrates an example of the template of FIG. 3 in a multimedia mobile terminal, and
- FIG. **6**: illustrates an example of the important phases of the inventive method.

### Detailed Description of the Invention

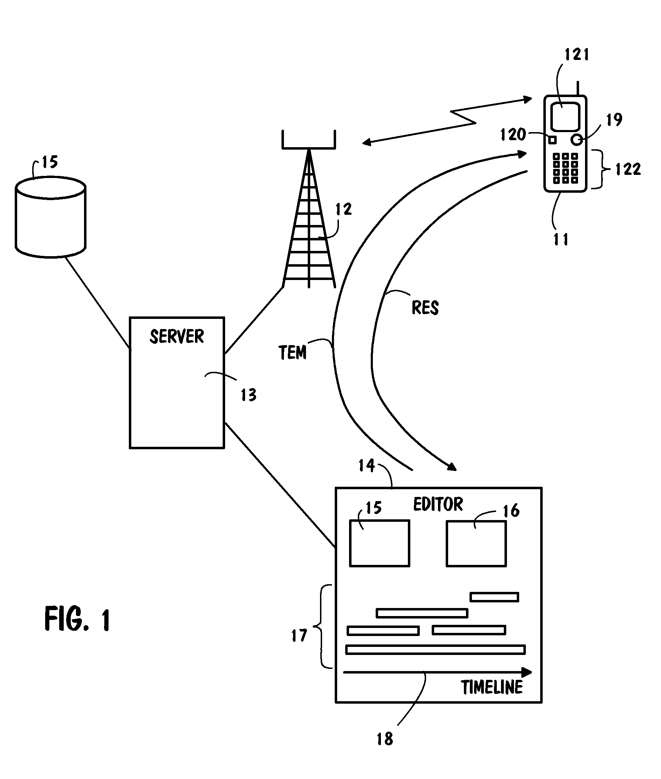

FIG. **1** illustrates an example of an inventive arrangement. A multimedia mobile terminal **11** is connected to a communication network through a radio path. When the user of the terminal desires to create a multimedia show, he sends a request for getting a template for the show. The request is transmitted via a base station **12** to a server **13** that is responsible for handling the request. The template may be in the server, or it can be in another location in the communication network, such as a certain database **15.** Furthermore and preferably, the server may contain an editor tool **14**, which can contain the template as well. The editor tool may also be in any suitable location in the network.

The user of the multimedia mobile terminal may also ask for several templates, if he wants to compare different choices. Naturally, the mobile terminal may already contain templates, so in this case, the request for getting templates is not required. However, that the available templates being in the editor tool **14**, is a preferable solution. The editor tool is a sophisticated, usually software, tool for creating multimedia shows. Often the editor comprises two display fields **15, 16** for showing the multimedia show under construction. The editor tool also comprises a timeline **18** to which different contents **17** of the multimedia show can be situated, forming the structure of the show.

The editor tool requires huge processing power for running efficiently. A large memory is required as well. Due to this, it is evident that multimedia mobile terminals are not capable of making attractive multimedia shows. For example, special effects require large capacity. Transitions, different filters, duration adjustment of a clip etc. makes a multimedia show look more professional.

The templates are predefined structures for a multimedia show. For example, a template can comprise two consecutive pictures and parallel text shown with the pictures: 2pict+text.temp. Let's assume the user of the mobile terminal **11** requests the template 2pict+text.temp from the editor tool **14.** The editor tool sends the template **TEM** to the terminal. Using the keyboard **122** and the display **121** of the multimedia mobile terminal the user can select contents into the template. The contents may already be in the terminal, since many multimedia terminals can take a picture through a camera **19**, and record audio clips through a microphone **120**. Naturally, the contents may also be in any location in the communication network, such as in a certain database **15**. The communication network can be a mobile network and/or a fixed network. Anyway, the terminal must contain the references to the actual contents. The contents can be different types, such as video or audio clips, text, still images or other material.

After defining the contents, the multimedia mobile terminal sends **RES** the template and the references of the contents to the editor tool **14:** 2pict+text.temp + refs. If the contents are in the terminal, they must also be sent to the editor tool. If the contents are in some other locations in the communication network, the editor tool can request them by using the references. It may be possible that at least some contents are already in the editor tool. Now, the editor tool uses the template, which is the structure of the multimedia show, for inserting the actual contents into the right places, and creates the desired multimedia show.

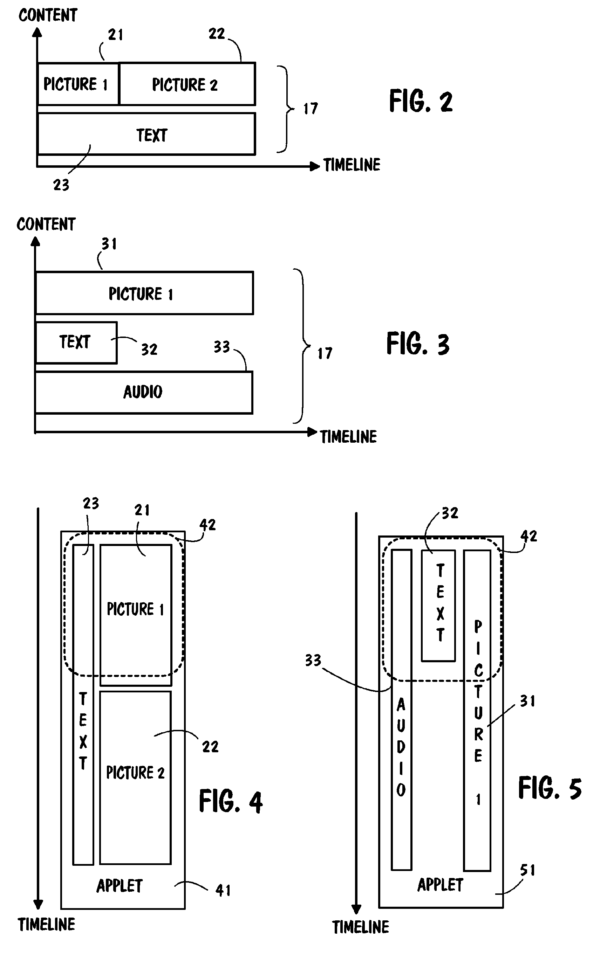

FIG. **2** illustrates an example of the multimedia show template of two consecutive pictures **1 21** and **2 22**, and parallel text **23** that is displayed with the pictures. The picture and text components, i.e. component fields, form a structure of a multimedia show. By inserting the desired contents into their places, i.e. pictures into the picture components and text into the text component, the multimedia show is created. FIG. **2** shows the templates as preferably seen in the editor tool. FIG. **3** shows an example of another template, which comprises three parallel components: an audio clip **33**, a picture **31**, and a short text **32**. So, it possible to situate the components fields in parallel and/or one after another.

As can be noted, a number of different predefined templates may exist. The use of predefined templates makes it easier to construct a multimedia show, especially when using a multimedia mobile terminal as a control panel. It should be also noted that the durations of content components are fixed, but they can be actually defined by the user of the multimedia mobile terminal. However, the option of defining durations consumes the capacity of the multimedia mobile terminal, so it is recommendable only in a high capacity multimedia mobile terminal (or in a fixed multimedia terminal).

FIG. **4** shows an example of the template of FIG. **2** in a multimedia mobile terminal. The terminal must contain means for inserting (or in other words, locating) desired contents into the template. The locating function uses the references of the contents, i.e. the actual location information and the names of the contents, for attaching the contents into the template. The means is, for example, an applet **41** that is sent to the terminal at the same time as the template information, or alternatively, the applet is already in the terminal and capable to be a platform for different templates. The template, which comprises picture 1 component **21**, picture 2 component **22,** and a text component **23** for contents, is situated on the applet. The display **42** of the multimedia mobile terminal is illustrated as a dashed line. Since the display is usually small, the whole template is difficult or even impossible to show in one screen. So the keyboard of the terminal must be used for scrolling the active view of the template. Preferably, the scrolling function is in a vertical direction, but a horizontal direction is possible as well. In other words, the keyboard of the control panel is adapted to command the control panel for creating the multimedia show.

A certain button of the keyboard must be defined as an activation button for activating the components of the template. For example, when the user wants to insert a picture in the picture 1 component **21**, he moves the cursor of the display on the picture 1, and clicks the activation button. Now, the applet is ready to situate the picture into the picture 1 component. The applet asks for the reference of the picture. Preferably, the applet can show a list of references from which the user can select the desired picture. In a similar way, a text reference is situated in the text component **23**, and the other picture reference in the picture 2 component **22**.

If the multimedia terminal is a high capacity terminal, it is possible to add optional features in the templates and/or the applet. For example, the durations of the template components may be adjustable - the user can define the duration of each component. It may also be possible to add transitions between pictures (such as barn doors). Furthermore it may be possible to show a preliminary presentation from the multimedia show that is under construction. The number of options depends on the capacity of the terminal.

FIG. **5** shows an example of the template of FIG. **3** in a multimedia mobile terminal. As in FIG. **4**, an applet **51 forms a platform for the template** components, **31** to **33.**

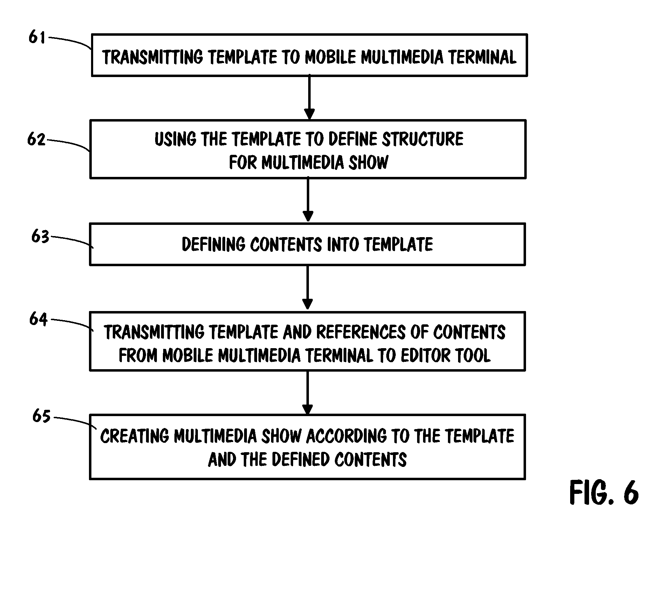

FIG. **6** shows an example of the important phases of the inventive method. It should be noted that some phases are not needed if the situation of creating a multimedia show does not require them. For example, the delivering phase **61** is not required, if the template is already in the multimedia mobile terminal. On the other hand, some additional phases may be mentioned as well, for example a transmitting phase of contents to the editor tool before creating **65** the multimedia show.

So, first a template or templates are transmitted **61** to the mobile multimedia terminal as a response to the user's request to get them. Alternatively, the templates can already be in the terminal, then the request is not required. When the template is in the terminal, it is used **62** to define a structure for the multimedia show. Contents are defined **63** into the template by using the references (address and name information) of the contents. After this, the template and the references of the contents are transmitted **64** from the mobile multimedia terminal to the editor tool. If the contents or at least one of them is in the mobile terminal, it must also be sent to the editor tool, either with the template or later when the editor tool requests them or it. After receiving the templates and references, the editor tool checks where the contents are. If the contents, such as video or audio clips, still pictures, and text, are somewhere else than in the editor tool, the editor tool requests them. The requested contents are transmitted to the editor tool. When the editor tool has all the contents, it creates **65** the desired multimedia show according to the structure of the template. When the multimedia show is ready, it can be delivered to any place the user of the mobile multimedia terminal defines, for example to friends' e-mail boxes, back to the mobile multimedia terminal, etc.

The invention is not restricted to the above-mentioned examples. The terminal of the user need not be a mobile terminal, or instead of using pre-defined templates, the user can create his own template. Due to this, it is evident that the invention can be used in a number of different solutions, in the scope of the inventive idea.

## Claims

1. An arrangement for creating a multimedia show, comprising an editor tool, **characterized in that** the arrangement comprises a control panel for defining a structure and contents for the multimedia show, the control panel being functionally connectable to the editor tool via a communication network, and the editor tool being adapted to work with the control panel.

2. An arrangement according to claim 1, **characterized in that** the arrangement further comprises at least one template which defines a structure for the multimedia show.

3. An arrangement according to claim 2, **characterized in that** the template is situated to a suitable place in the communication network, and the template is transmitted to the control panel, if necessary.

4. An arrangement according to claim 3, **characterized in that** the control panel comprises a means for locating the contents into the template.

5. An arrangement according to claim 4, **characterized in that** said locating means is an applet

6. An arrangement according to claim 4 or 5, **characterized in that** said locating means uses references of the contents when locating the contents into the template.

7. An arrangement according to claim 6, **characterized in that** said references define the locations and names of the contents.

8. An arrangement according to claim 7, **characterized in that** the template and the references of the contents are transmitted to the editor tool via the communication network, and, if necessary, the editor tool requests the contents according to the information of the references, and when obtaining the contents, the editor tool creates the multimedia show according to the structure defined in the template.

9. An arrangement according to any of claims 2 - 8, **characterized in that** the template comprises at least one component field that is defined for a certain type of content.

10. An arrangement according to claim 9, **characterized in that** the component fields are arranged to be parallel and/or consecutive.

11. An arrangement according to any of claims 1 - 10, **characterized in that** a single content of said contents belongs to a content type from a group of content types: video, image, audio, text, logo, drawing, transition, and special effects.

12. An arrangement according to any of claims 1 - 11, **characterized in that** the control panel is a mobile terminal or a fixed terminal.

13. An arrangement according to claim 12, **characterized in that** a part of a keyboard of the control panel is adapted to command the control panel for creating the multimedia show.

14. An arrangement according to any of claims 1 - 13, **characterized in that** the communication network is a mobile network and/or a fixed network.

15. A method for creating a multimedia show, **characterized in that** the method comprises the steps of
- using a template for defining a structure for the multimedia show,
- defining contents into the template in a control panel by using references of the contents,
- transmitting the template and references of the contents from the control panel to an editor tool, and
- creating the multimedia show in the editor tool according to the template and the references.

16. A method according to claim 15, **characterized in that** the method further comprises the step of transmitting the template to the control panel, if needed.

17. A method according to claim 15 or 16, **characterized in that** the method further comprises the step of transmitting the contents according to the references to the editor tool before creating the multimedia show.

18. A method according to claim 15, 16, or 17, **characterized in that** the method further comprises the steps of delivering the multimedia show to a desired place.
